# FASCICULE DE BREVET EUROPEEN

(11) **EP 0 786 369 B1**
(45) Date de publication et mention de la délivrance du brevet: **17.04.2002**
(21) Numéro de dépôt: 97100588.9
(22) Date de dépôt: 16.01.1997
(51) Int. Cl.: B60L 3/10

(54) **Procédé et dispositif de régulation commune de plusieurs moteurs électriques entraînant les roues motrices d'un véhicule automobile**
Verfahren und Vorrichtung zur gemeinsamen Steuerung von mehreren die Antriebsräden eines Farhzeugs antreibenden Elektromotoren
Method and device to commonly control several electric motors driving the traction wheels of a vehicle

(30) Priorité: 29.01.1996 FR 9600997
(43) Date de publication de la demande: 30.07.1997
(73) Titulaire: The Swatch Group Management Services AG, 2501 Biel (CH)
(72) Inventeur: Bossoney, Luc, 2520 La Neuveville (CH); Apter, Robert, 1400 Yverdon-les-Bains (CH)
(74) Mandataire: Balsters, Robert

(56) Documents cités:
- EP-A- 0 594 130
- US-A- 4 335 337

## Description

La présente invention concerne un procédé de régulation de l'alimentation électrique commune de plusieurs machines électriques susceptibles d'entraîner chacune une roue motrice d'un véhicule automobile, dans lequel on produit un courant d'alimentation alternatif et polyphasé tout en effectuant une régulation de la tension et/ou de la fréquence dudit courant d'alimentation en fonction d'au moins un signal de consigne et d'un signal de référence pour alimenter ensemble lesdites machines électriques, on produit continuellement un jeu de signaux de vitesse représentant chacun la vitesse de rotation d'une roue motrice respective et l'on sélectionne l'un des signaux de vitesse dans ledit jeu pour délivrer le signal de référence.

L'invention concerne également un système d'entraînement d'un véhicule automobile à traction électrique, notamment pour la mise en oeuvre du procédé susmentionné, ledit système comportant plusieurs machines électriques couplées chacune à une roue motrice du véhicule, un dispositif d'alimentation produisant un courant d'alimentation alternatif polyphasé pour alimenter ensemble lesdites machines électriques, et un dispositif de régulation pour commander le dispositif d'alimentation en fonction d'un signal de consigne de traction et des vitesses de rotation des roues motrices, le dispositif de régulation comportant des moyens pour produire continuellement un jeu de signaux de vitesse représentant respectivement les vitesses de chaque roue motrice, des moyens de traitement agencés pour délivrer un signal de référence en fonction des signaux de vitesse, et une unité de commande agencée pour recevoir le signal de consigne de traction et le signal de référence et commander en conséquence le dispositif d'alimentation.

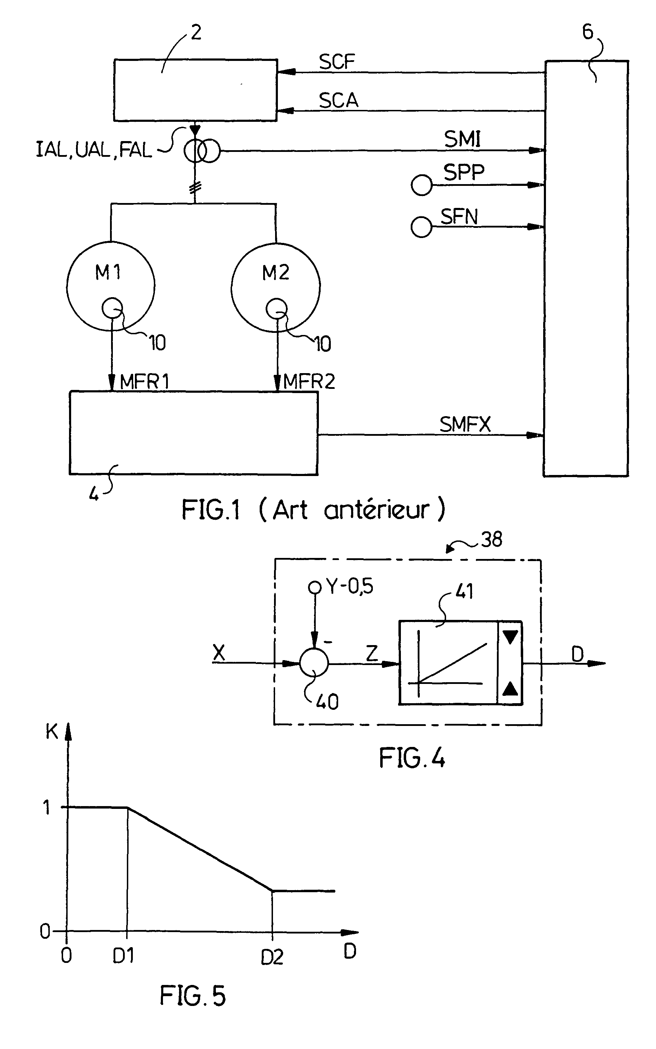

La demande de brevet EP-A-0 576 947 décrit un tel système d'entraînement d'un véhicule automobile électrique à deux ou quatre roues motrices. Ce système est illustré schématiquement par la figure 1 ci-jointe pour le cas d'un véhicule à deux roues motrices. Chaque roue motrice est couplée à son propre moteur asynchrone polyphasé M1, M2, tous ces moteurs étant connectés à une alimentation électrique centrale 2 qui produit un courant polyphasé IAL à tension UAL et fréquence FAL, lesquelles sont variables par modulation de largeur d'impulsions (PWM) sous le contrôle d'un dispositif électronique de régulation. Ce dispositif reçoit comme entrées, d'une part, des signaux de consigne de traction SPP et de freinage SFN, produits par exemple par le conducteur à l'aide d'une pédale de commande, et d'autre part un signal SMI représentatif du courant d'alimentation polyphasé et un jeu de signaux de fréquence MFR1, MFR2 dont chacun provient d'un capteur respectif 10 et représente la vitesse instantanée de rotation du moteur correspondant M1, M2 et de la roue associée à celui-ci. Le dispositif traite les signaux d'entrée pour délivrer à l'alimentation centrale 2 deux signaux de commande SCF et SCA qui définissent respectivement la fréquence et l'amplitude, donc la tension efficace de l'alimentation commune des moteurs.

Vu que les roues peuvent tourner à des vitesses différentes, notamment lorsque le véhicule circule en courbe, l'un desdits signaux de fréquence (c'est-à-dire de vitesse) MFR1, MFR2 est sélectionné par une unité de traitement 4 comme signal de référence SFMX à utiliser pour la régulation par une unité de commande 6, tandis que le ou les autres signaux du jeu restent inutilisés. Selon le document cité, on sélectionne toujours le signal de fréquence le plus élevé, de sorte que la régulation de l'ensemble des moteurs s'effectue en temps réel en considérant seulement le moteur et la roue qui tournent le plus vite.

Ce procédé connu est avantageux aussi bien en mode de traction qu'en mode de freinage électrique, en association avec des moteurs asynchrones, parce que ceux-ci ne produisent un couple que s'il existe une différence de vitesse de rotation entre le rotor et le champ tournant statorique, différence appelée le glissement. En mode de traction, le moteur tournant le plus vite a le plus faible glissement et fournit donc le plus faible couple moteur. La roue correspondante a donc moins tendance à patiner que les autres et, si elle patine quand même à cause d'une adhérence insuffisante, le glissement de son moteur diminue et donc aussi le couple, ce qui favorise une reprise d'adhérence de la roue. Par conséquent, dans la plupart des cas de patinage en traction, la vitesse de la roue qui patine ne s'élève pas beaucoup, de sorte que le dispositif de régulation n'augmente pas beaucoup la fréquence d'alimentation et que le couple moteur subsiste sur la ou les autres roues motrices.

Il peut toutefois arriver qu'une roue motrice (ou plusieurs) patine assez longtemps pour que le dispositif de régulation "s'emballe" en élevant de manière répétée la fréquence de l'alimentation commune en mode de traction. En particulier si une roue motrice patine sur une surface très glissante telle que de la glace, elle continue d'être entraînée presque à la vitesse du champ tournant, avec un faible couple et un faible glissement du moteur. Comme le dispositif de régulation définit la fréquence de consigne en ajoutant une fréquence de glissement substantielle à la fréquence du signal de référence fourni par la roue tournant le plus vite, il tend alors à augmenter la fréquence de l'alimentation, donc la vitesse de la roue qui patine, donc encore une fois la fréquence de l'alimentation, et ainsi de suite. Dans les autres moteurs, le glissement devient si grand que le couple finit par diminuer sur la ou les roues qui ne patinent pas, si bien qu'une traction correcte n'est plus possible. Cette situation fâcheuse ne peut pas disparaître sans une action extérieure, par exemple un changement du signal de consigne parce que le conducteur relâche beaucoup l'accélérateur, ou sans l'utilisation d'un dispositif antipatinage généralement complexe et coûteux, tel qu'on en connaît pour des automobiles classiques.

En mode de freinage, le principe de sélection du signal représentatif de la roue qui tourne le plus vite est avantageux dans le cas où une roue ayant une adhérence insuffisante est bloquée. Par le terme de "bloquée", on entend ici que la rotation de la roue est arrêtée, par exemple par un freinage mécanique, ou excessivement ralentie par un freinage électrique, de sorte qu'elle glisse sur le sol parce que sa vitesse de rotation tombe rapidement à une valeur largement inférieure à celle qui résulterait de la vitesse de marche du véhicule. Avec le principe de sélection susmentionné, le signal de vitesse d'une roue bloquée ne sera pas sélectionné. Toutefois, le dispositif décrit dans le document cité ne peut pas fonctionner correctement si toutes les roues motrices sont bloquées, parce qu'il continue alors de freiner électriquement les roues en maintenant un glissement négatif dans les moteurs.

La présente invention vise à perfectionner un tel procédé et un tel dispositif de façon à prévenir automatiquement un emballement d'une ou plusieurs roues motrices en cas de patinage en mode de traction, en utilisant des moyens techniques relativement simples, fiables et peu coûteux. Selon un but supplémentaire de l'invention, le procédé et le dispositif devraient permettre un fonctionnement selon un principe analogue en mode de freinage électrique.

Dans ce but, l'invention fournit un procédé du genre indiqué plus haut, caractérisé en ce que, dans un mode de traction où lesdites machines entraînent les roues motrices, on effectue continuellement une détection de patinage pour chaque roue motrice et, dans l'étape de sélection, si au moins une roue motrice patine et au moins une roue motrice ne patine pas, on sélectionne le signal de vitesse correspondant à la roue motrice qui tourne le plus vite sans patiner ou, si toutes les roues motrices patinent, on utilise un premier signal de rechange pour délivrer le signal de référence.

Ainsi, dans le cas où par exemple une seule roue patine en traction, le signal de vitesse correspondant est simplement laissé de côté et la sélection s'effectue sur le ou les autres signaux de vitesse selon le procédé de l'art antérieur, avec les mêmes avantages et sans risque d'emballement. Si toutes les roues patinent, la régulation peut se poursuivre de manière rationnelle à l'aide d'un signal de rechange qui représente, par exemple, la vitesse de rotation d'une roue motrice immédiatement avant le patinage.

Selon un développement avantageux du procédé, dans un mode de freinage où lesdites machines sont entraînées par les roues motrices, on effectue continuellement une détection de blocage pour chaque roue motrice et, dans l'étape de sélection, si au moins une roue motrice n'est pas bloquée, on sélectionne le signal de vitesse correspondant à la roue motrice qui tourne le plus vite ou, si toutes les roues motrices sont bloquées, on utilise un second signal de rechange pour délivrer le signal de référence.

Il en résulte que des règles de sélection analogues sont appliquées en mode de traction et en mode de freinage, puisque le cas où toutes les roues motrices sont bloquées est résolu d'une manière analogue au cas où toutes les roues motrices patinent. De préférence, le second signal de rechange représente la vitesse de rotation d'une roue motrice immédiatement avant le blocage, de sorte qu'il peut être déterminé de la même manière que le premier.

Un système d'entraînement selon l'invention est caractérisé en ce que les moyens de traitement comportent des moyens de sélection et, pour chaque signal de vitesse, une unité de détection de patinage agencée pour détecter un patinage par détection d'une élévation brusque du signal de vitesse et pour délivrer aux moyens de sélection un signal de vitesse corrigé et un signal de patinage, les moyens de sélection étant agencés pour sélectionner l'un des signaux de vitesse corrigés comme signal de référence en fonction des signaux de patinage.

De préférence, chaque unité de détection de patinage est agencée en outre pour détecter un blocage de la roue correspondante par détection d'une diminution brusque du signal de vitesse et pour délivrer aux moyens de sélection un signal de blocage, les moyens de sélection étant agencés pour sélectionner l'un des signaux de vitesse corrigés comme signal de référence en fonction des signaux de patinage et des signaux de blocage.

D'autres caractéristiques et avantages de l'invention apparaîtront dans la description d'un mode de réalisation préféré de l'invention, présenté ci-dessous à titre d'exemple en référence aux dessins annexés, dans lesquels:
- la figure 1 représente schématiquement un système d'entraînement selon l'art antérieur décrit plus haut,
- la figure 2 représente schématiquement un système d'entraînement selon un mode de réalisation de la présente invention,
- la figure 3 est un schéma fonctionnel d'un élément de la figure 2,
- la figure 4 est un schéma fonctionnel d'un autre élément de la figure 2, et
- la figure 5 est un diagramme représentant une fonction appliquée par un autre élément de la figure 2.

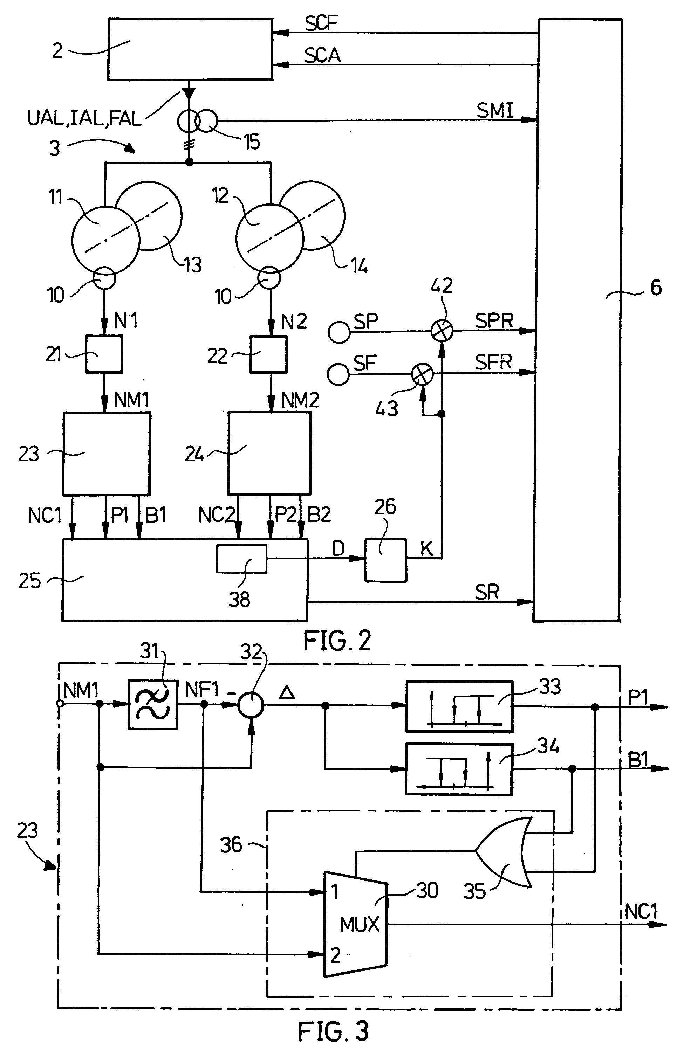

Selon la figure 2, comme dans le cas de la figure 1, un dispositif d'alimentation électrique 2 produit, sur un circuit d'alimentation 3, un courant d'alimentation alternatif polyphasé ayant une tension UAL, une intensité IAL et une fréquence FAL, pour alimenter deux machines électriques asynchrones 11, 12, couplées respectivement à deux roues motrices 13, 14 du véhicule. Le dispositif d'alimentation 2 peut être de n'importe quel type approprié, par exemple sous la forme d'une batterie d'accumulateurs associée à un convertisseur électronique comprenant un dispositif de commutation de puissance et un modulateur de largeur d'impulsions, ou un groupe générateur comprenant un moteur thermique, une génératrice électrique et, le cas échéant, un convertisseur électronique. L'invention s'applique donc aussi bien à un véhicule à propulsion hybride qu'à un véhicule purement électrique.

Le dispositif d'alimentation 2 est commandé par un dispositif de régulation 6 qui lui délivre un signal de consigne de fréquence SCF et un signal de consigne d'amplitude SCA. Le dispositif 6 élabore ses signaux, par exemple de la manière décrite dans le document EP-A-0 576 947, à partir de signaux SMI, SP, SF et SR qu'il reçoit. Le signal SMI est un signal de mesure du courant d'alimentation électrique principal produit par le dispositif 2. Ce signal est fourni par un capteur de courant 15. Les signaux SP et SF sont des signaux de consigne, respectivement de traction et de freinage, provenant d'organes de commande actionnés par le conducteur du véhicule. Le signal SR est un signal de référence destiné à représenter une vitesse des roues motrices 13, 14 et de leurs moteurs 11, 12. L'élaboration de ce signal de référence constitue un point essentiel de l'invention décrite ici.

Un capteur de vitesse 10 est associé respectivement à chaque moteur 11, 12 (ou à chaque roue correspondante 13, 14) et délivre un signal de mesure N1, N2 à une unité de traitement 21, 22 qui traite et normalise ce signal de mesure pour délivrer un signal de vitesse NM1, NM2 qui, dans cet exemple, est sous forme analogique, mais une réalisation sous forme numérique est aussi possible. Ce signal de vitesse est délivré à l'entrée d'une unité de détection de patinage 23, 24 qui sera décrite en détail plus loin. Chaque unité 23, 24 délivre à une unité commune de sélection 25 un signal de vitesse corrigé NC1, NC2, un signal de patinage P1, P2 et un signal de blocage B1, B2. L'unité de sélection 25 traite ces signaux et délivre en conséquence le signal de référence SR au dispositif de régulation 6. Le cas échéant, elle délivre également un signal D à une unité de traitement 26 qui sera décrite plus loin.

Bien entendu, le système d'entraînement peut comporter plus de deux moteurs 11, 12, par exemple quatre moteurs couplés à quatre roues motrices. Il comprendra alors autant de dispositifs de détection de patinage 23, 24 qui délivreront leurs signaux respectifs à l'unité de sélection 25. La description qui suit s'applique aussi à un tel cas.

La figure 3 est un schéma fonctionnel de l'unité de détection de patinage 23 qui traite le signal de vitesse NM1. Le même schéma s'applique à l'unité 24 si l'on remplace le chiffre 1 par 2 dans les noms des signaux.

Dans l'unité 23, le signal de vitesse NM1 est transmis à la fois à une première entrée d'un multiplexeur 30 et à un circuit d'entrée constitué par un filtre passe-bas 31 qui délivre un signal filtré NF1 à une deuxième entrée du multiplexeur 30. Un circuit différentiateur 32 reçoit également les signaux NM1 et NF1 et calcule leur différence algébrique Δ, dont le signal représentatif est transmis à deux comparateurs à hystérèse 33 et 34 délivrant respectivement un signal de patinage P1 et un signal de blocage B1. Les signaux P1 et B1 sont transmis aux deux entrées d'une porte OU 35 qui commande le multiplexeur 30 et forme avec lui un circuit de sortie 36.

Les signaux P1 et B1 sont des signaux binaires. Le premier comparateur 33 donne à P1 la valeur 1 lorsqu'une valeur positive de Δ a dépassé un seuil positif prédéterminé, et la valeur 0 lorsque la valeur de Δ est redescendue. Le second comparateur 34 donne à B1 la valeur 1 lorsqu'une valeur négative de Δ dépasse vers le bas un seuil négatif, et la valeur 0 lorsque la valeur Δ est remontée.

Lorsque le signal de vitesse NM1 est constant ou présente une variation relativement lente, correspondant à une accélération ou décélération normale du véhicule, cette variation peut se répercuter à travers le filtre passe-bas 31 dans le signal NF1, si bien que la valeur de Δ sera nulle ou faible et que les deux signaux P1 et B1 auront la valeur 0. Dans ce cas, le signal de sortie de la porte OU 35 a aussi la valeur 0 et commande le passage de la première entrée du multiplexeur 30 à la sortie de celui-ci, de sorte que le signal de vitesse corrigé NC1 est égal à NM1.

Par contre, si la roue motrice 13 commence à patiner en traction, son signal de vitesse NM1 s'élève brusquement, mais sa valeur filtrée NF1 correspond à la vitesse avant patinage. La différence Δ dépasse alors le seuil déterminé par le comparateur 33, le signal P1 prend la valeur 1 indiquant qu'il y a patinage, tandis que B1 reste à 0. Le signal de sortie de la porte OU 35 prend la valeur 1 et fait transmettre à la sortie du multiplexeur 30 la seconde entrée de celui-ci. Le signal de vitesse corrigé NC1 a alors la valeur filtrée NF1 indiquant la vitesse de la roue avant patinage.

De manière analogue, si la roue motrice 13 se bloque lors d'un freinage, la chute brusque de son signal de vitesse NM1 ne se répercute pas à travers le filtre 31 et le signal filtré NF1 représente alors la vitesse de la roue avant blocage. La différence Δ a une valeur fortement négative, qui dépasse vers le bas le seuil fixé dans le comparateur 34 et donne la valeur 1 au signal de blocage B1, tandis que P1 reste à 0. Comme dans le cas précédent, la sortie de la porte OU 35 a la valeur 1, de sorte que le signal de vitesse corrigé NC1 est égal à NF1 et représente la vitesse de la roue avant blocage.

Ainsi, l'unité de sélection 25 reçoit trois signaux NC, P et B pour chaque roue motrice. Elle est agencée de préférence pour sélectionner l'un des signaux NC conformément aux règles suivantes pour le délivrer comme signal de référence SR :
- Si toutes les roues motrices patinent, tous les signaux de patinage P ont la valeur 1. Tous les signaux de vitesse corrigés NC représentent les vitesses avant patinage, indiquées par les signaux filtrés NF. L'unité 25 sélectionne alors le signal NC ayant la valeur minimale, c'est-à-dire que le signal de référence SR est formé par un premier signal de rechange représentant la vitesse de la roue qui tournait le moins vite avant de patiner.
- Si toutes les roues sont bloquées, tous les signaux B ont la valeur 1. Tous les signaux de vitesse corrigés NC représentent les vitesses avant blocage, indiquées par les signaux filtrés NF. L'unité de sélection 25 sélectionne alors le signal NC ayant la valeur maximale, c'est-à-dire que le signal de référence SR est formé par un second signal de rechange représentant la vitesse de la roue qui tournait le plus vite avant d'être bloquée.
- Dans tous les autres cas, l'unité de sélection 25 sélectionne le signal NC ayant la valeur maximale. C'est le cas non seulement lorsque toutes les roues motrices adhèrent normalement au sol, de sorte que tous les signaux NC sont égaux aux signaux de vitesse respectifs NM, mais aussi lorsqu'au moins une roue motrice adhère pendant que les autres patinent ou sont bloquées. L'alimentation du moteur de la roue ou de chaque roue qui adhère peut alors se poursuivre normalement. Cette règle de sélection s'applique également au cas théorique où certaines roues motrices patineraient et toutes les autres seraient bloquées.

Le signal D produit par l'unité de sélection 25 est destiné à limiter le couple de traction ou de freinage produit par les machines électriques 11, 12 fonctionnant respectivement en moteur ou en génératrice, lorsque toutes les roues motrices patinent ou sont bloquées, grâce à une limitation des signaux de consigne de traction SP et de freinage SF. Une telle situation est indiquée par le fait que, pour chaque roue motrice, le signal de patinage P ou le signal de blocage B a la valeur 1. Dans cette situation, un bloc intégrateur 38 incorporé à l'unité de sélection 25 délivre le signal D représentant la durée de patinage ou de blocage de toutes les roues motrices. La figure 4 représente un schéma fonctionnel du bloc 38, où X représente le nombre de roues motrices qui patinent ou sont bloquées, et Y est le nombre total des roues motrices, par exemple deux dans le schéma de la figure 2. Un différentiateur 40 délivre un signal Z égal à la différence positive entre X et (Y - 0,5). Un circuit intégrateur 41, constitué par exemple par un compteur d'impulsions d'horloge, intègre le signal Z en fonction du temps et délivre à sa sortie le signal D limité vers le bas à zéro et vers le haut à une valeur prédéterminée. Comme le montre la figure 1, le signal D est transmis à l'unité de traitement 26 qui lui applique la fonction représentée à la figure 5 pour délivrer le signal K. Celui-ci a la valeur 1 tant que la durée de patinage ou de blocage D est inférieure à une première limite D1, puis il est réduit progressivement en fonction du temps jusqu'à une seconde durée limite D2, après quoi K garde une valeur réduite constante. Les limites D1 et D2 seront choisies en fonction d'un comportement dynamique souhaité du véhicule. Le signal K agit comme facteur dans des circuits multiplicateurs 42 et 43 pour réduire les signaux de consigne respectifs SP et SF à des valeurs réduites SPR et SFR lorsque les roues motrices patinent ou sont bloquées pendant une durée supérieure à D1. Cette réduction a pour effet de limiter l'alimentation des machines électriques 11 et 12 par le dispositif d'alimentation 2, donc de réduire leur couple et de favoriser une reprise d'adhérence des roues.

Dans une variante non représentée du dispositif décrit ci-dessus, on peut prévoir d'agir séparément sur les signaux de consigne SP et SF, selon qu'il s'agit d'un patinage ou d'un blocage des roues motrices. On prévoit alors une première unité 38 et une première unité 26 pour produire un facteur de réduction K agissant sur le premier circuit multiplicateur 42 pour limiter la traction en cas de patinage, et une seconde unité 38 et une seconde unité 26 pour produire un second facteur de réduction K agissant sur le second circuit multiplicateur 43 en cas de blocage des roues. Cela permet d'adopter des valeurs différentes des paramètres D1, D2 et K dans les deux situations.

La description qui précède montre que la présente invention permet, en conservant les avantages de l'art antérieur, d'assurer une commande adéquate des machines électriques fonctionnant en moteur ou en génératrice dans tous les cas où se produit un patinage ou un blocage d'une ou plusieurs roues motrices, et ceci d'une manière qui favorise la reprise d'adhérence de ces roues. En outre, ces avantages peuvent être obtenus sans exiger aucune modification du dispositif de régulation 6 de l'art antérieur. Toutefois, on peut aussi modifier ce dispositif sans sortir du cadre de la présente invention tel que defini par les revendications.

## Revendications

1. Procédé de régulation de l'alimentation électrique commune de plusieurs machines électriques (11, 12) susceptibles d'entraîner chacune une roue motrice (13, 14) d'un véhicule automobile, dans lequel on produit un courant d'alimentation alternatif polyphasé tout en effectuant une régulation de la tension et/ou de la fréquence dudit courant d'alimentation en fonction d'au moins un signal de consigne et d'un signal de référence (SR) pour alimenter ensemble lesdites machines électriques, on produit continuellement un jeu de signaux de vitesse (NM1, NM2) représentant chacun la vitesse de rotation d'une roue motrice respective et l'on sélectionne l'un des signaux de vitesse dans ledit jeu pour délivrer le signal de référence,
**caractérisé en ce que**, dans un mode de traction où lesdites machines entraînent les roues motrices, on effectue continuellement une détection de patinage pour chaque roue motrice et, dans l'étape de sélection, si au moins une roue motrice patine et au moins une roue motrice ne patine pas, on sélectionne le signal de vitesse (NM1, NM2) correspondant à la roue motrice qui tourne le plus vite sans patiner ou, si toutes les roues motrices patinent, on utilise un premier signal de rechange (NF1) pour délivrer le signal de référence (SR).

2. Procédé selon la revendication 1, **caractérisé en ce que** le premier signal de rechange représente la vitesse d'une roue motrice mesurée immédiatement avant qu'elle patine.

3. Procédé selon la revendication 1 ou 2, **caractérisé en ce que**, dans un mode de freinage où lesdites machines sont entraînées par les roues motrices, on effectue continuellement une détection de blocage pour chaque roue motrice et, dans l'étape de sélection, si au moins une roue motrice n'est pas bloquée, on sélectionne le signal de vitesse (NM1, NM2) correspondant à la roue motrice qui tourne le plus vite ou, si toutes les roues motrices sont bloquées, on utilise un second signal de rechange (NF1) pour délivrer le signal de référence (SR).

4. Procédé selon la revendication 3, **caractérisé en ce que** le second signal de rechange représente la vitesse d'une roue motrice mesurée immédiatement avant qu'elle soit bloquée.

5. Système d'entraînement d'un véhicule automobile à traction électrique, notamment pour la mise en oeuvre du procédé selon la revendication 1, ledit système comportant plusieurs machines électriques (11, 12) couplées chacune à une roue motrice (13, 14) du véhicule, un dispositif d'alimentation (2) produisant un courant d'alimentation alternatif polyphasé pour alimenter ensemble lesdites machines électriques, et un dispositif de régulation (6) pour commander le dispositif d'alimentation en fonction d'un signal de consigne de traction (SP) et des vitesses de rotation des roues motrices, le dispositif de régulation comportant des moyens (10, 21, 22) pour produire continuellement un jeu de signaux de vitesse (NM1, NM2) représentant respectivement les vitesses de chaque roue motrice, des moyens de traitement (23, 24, 25) agencés pour délivrer un signal de référence (SR) en fonction des signaux de vitesse, et une unité de commande (6) agencée pour recevoir le signal de consigne de traction et le signal de référence et commander en conséquence le dispositif d'alimentation,
**caractérisé en ce que** les moyens de traitement comportent des moyens de sélection (25) et, pour chaque signal de vitesse, une unité de détection de patinage (23, 24) agencée pour détecter un patinage par détection d'une élévation brusque du signal de vitesse et pour délivrer aux moyens de sélection un signal de vitesse corrigé (NC1, NC2) et un signal de patinage (P1, P2), les moyens de sélection étant agencés pour sélectionner l'un des signaux de vitesse corrigés comme signal de référence (SR) en fonction des signaux de patinage.

6. Système d'entraînement selon la revendication 5, **caractérisé en ce que** chaque unité de détection de patinage (23, 24) est agencée en outre pour détecter un blocage de la roue correspondante par détection d'une diminution brusque du signal de vitesse et pour délivrer aux moyens de sélection (25) un signal de blocage (B1, B2), les moyens de sélection étant agencés pour sélectionner l'un des signaux de vitesse corrigés (NC1, NC2) comme signal de référence en fonction des signaux de patinage (P1, P2) et des signaux de blocage (B1, B2).

7. Système d'entraînement selon la revendication 5, **caractérisé en ce que** chaque unité de détection de patinage (23, 24) comporte :
- un circuit d'entrée (31) recevant le signal de vitesse (NM1) et produisant à chaque instant un signal de rechange (NF1) qui représente un état antérieur du signal de vitesse,
- un circuit différentiateur (32) produisant un signal différentiel (Δ) qui représente la différence entre le signal de rechange et le signal de vitesse,
- un circuit de comparaison (33) qui compare le signal différentiel à un seuil et délivre le signal de patinage (P1) sous une forme binaire, indiquant un patinage si ledit seuil est dépassé, et
- un circuit de sortie (36) qui reçoit lesdits signaux de vitesse, de rechange et de patinage et délivre comme signal de vitesse corrigé (NC1) le signal de vitesse (NM1) ou le signal de rechange (NF1), en fonction de l'état du signal de patinage.

8. Système d'entraînement selon la revendication 7, **caractérisé en ce que** chaque signal de vitesse (NM1) est un signal analogique et **en ce que** ledit circuit d'entrée (31) est un filtre passe-bas.

9. Système d'entraînement selon les revendications 6 et 7, **caractérisé en ce que** l'unité de détection de patinage (23, 24) comporte un autre circuit de comparaison (34), qui compare le signal différentiel à un seuil négatif et délivre le signal de blocage (B1) sous une forme binaire, indiquant un blocage si ledit seuil négatif est dépassé vers le bas, le circuit de sortie (36) recevant en outre le signal de blocage et délivrant comme signal de vitesse corrigé (NC1) le signal de vitesse ou le signal de rechange, en fonction de l'état des signaux de patinage et de blocage (P1, B1).

10. Système d'entraînement selon la revendication 5, **caractérisé en ce que** les moyens de traitement comportent des moyens (26, 38, 42) pour mesurer une durée pendant laquelle les signaux de patinage indiquent que toutes les roues motrices patinent et pour modifier le signal de consigne de traction lorsque ladite durée dépasse une valeur prédéterminée.

11. Système d'entraînement selon les revendications 6 et 10, **caractérisé en ce que** les moyens de traitement comportent des moyens (26, 38, 43) pour mesurer une durée pendant laquelle les signaux de blocage indiquent que toutes les roues motrices sont bloquées et pour modifier un signal de consigne de freinage lorsque ladite durée dépasse une valeur prédéterminée.

## Claims

1. Method for regulating the common electric supply of several electric machines (11, 12) each capable of driving a driving wheel (13, 14) of a motor vehicle, wherein a polyphase AC supply current, whose voltage and/or frequency are regulated as a function of at least one set-value signal and one reference signal (SR), is produced for supplying said electric machines together, a set of speed signals (NM1, NM2), each representing the speed of rotation of a respective driving wheel, is continually produced and one of the speed signals is selected from said set in order to deliver the reference signal,
**characterised in that**, in a drive mode where said machines drive the driving wheels, skid detection is continually being effected for each driving wheel and, in the selection step, if at least one driving wheel is skidding and at least one driving wheel is not skidding, the speed signal (NM1, NM2) corresponding to the fastest rotating non-skidding driving wheel is selected or, if all the driving wheels are skidding, a first substitution signal (NF1) is used in order to deliver the reference signal (SR).

2. Method according to claim 1, **characterised in that** the first substitution signal represents the speed of a driving wheel measured immediately before it skids.

3. Method according to claim 1 or 2, **characterised in that**, in a braking mode where said machines are driven by the driving wheels, locking detection is continually effected for each driving wheel and, in the selection step, if at least one driving wheel is not locked, the speed signal (NM1, NM2) corresponding to the fastest rotating driving wheel is selected or, if all the driving wheels are locked, a second substitution signal (NF1) is used in order to deliver the reference signal (SR).

4. Method according to claim 3, **characterised in that** the second substitution signal represents the speed of a driving wheel measured immediately before it locks.

5. Driving system for an electrically powered motor vehicle, in particular for implementing the method according to claim 1, said system comprising several electric machines (11, 12) each coupled to a driving wheel (13, 14) of the vehicle, a supply device (2) producing a polyphase AC supply current to supply said electric machines together, and a regulating device (6) for controlling the supply device as a function of a set-value drive signal (SP) and the rotation speeds of the driving wheels, the regulating device comprising means (10, 21, 22) for continually producing a set of speed signals (NM1, NM2) representing respectively the speeds of each driving wheel, processing means (23, 24, 25) arranged for delivering a reference signal (SR) as a function of the speed signals, and a control unit (6) arranged for receiving the set-value drive signal and the reference signal and consequently for controlling the supply device, **characterised in that** the processing means comprise selection means (25) and, for each speed signal, a skid detection unit (23, 24) arranged for detecting skidding via detection of an abrupt rise in the speed signal and for delivering to the selection means a corrected speed signal (NC1, NC2) and a skid signal (P1, P2), the selection means being arranged for selecting one of the corrected speed signals as reference signal (SR) as a function of the skid signals.

6. Driving system according to claim 5, **characterised in that** each skid detection unit (23, 24) is further arranged for detecting locking of the corresponding wheel via detection of an abrupt decrease in the speed signal and for delivering to the selection means (25) a locking signal (B1, B2), the selection means being arranged for selecting one of the corrected speed signals (NC1, NC2) as reference signal as a function of the skid signals (P1, P2) and the locking signals (B1, B2).

7. Driving system according to claim 5, **characterised in that** each skid detection unit (23, 24) comprises:
- an input circuit (31) receiving the speed signal (NM1) and producing at each moment a substitution signal (NF1) which represents a former state of the speed signal,
- a differentiating circuit (32) producing a differential signal (Δ) which represents the difference between the substitution signal and the speed signal,
- a comparison circuit (33) which compares the differential signal to a threshold and delivers the skid signal (P1) in binary form, indicating skidding if said threshold is exceeded, and
- an output circuit (36) which receives said speed, substitution and skid signals and delivers as corrected speed signal (NC1) the speed signal (NM1) or the substitution signal (NF1), as a function of the state of the skid signal.

8. Driving system according to claim 7, **characterised in that** each speed signal (NM1) is an analogue signal and **in that** said input circuit (31) is a low-pass filter.

9. Driving system according to claims 6 and 7, **characterised in that** the skid detection unit (23, 24) comprises another comparison circuit (34), which compares the differential signal to a negative threshold and delivers the locking signal (B1) in binary form, indicating locking if said negative threshold is exceeded in a negative direction, the output circuit (36) further receiving the locking signal and delivering as corrected speed signal (NC1) the speed signal or the substitution signal, as a function of the state of the skid and locking signals (P1, B1).

10. Driving system according to claim 5, **characterised in that** the processing means comprise means (26, 38, 42) for measuring a period of time during which the skid signals indicate that all the driving wheels are skidding and for modifying the set-value drive signal when said period of time exceeds a predetermined value.

11. Driving system according to claims 6 and 10, **characterised in that** the processing means comprise means (26, 38, 43) for measuring a period of time during which the locking signals indicate that all the driving wheels are locked and for modifying a set-value braking signal when said period of time exceeds a predetermined value.

## Patentansprüche

1. Verfahren zum Regeln der gemeinsamen elektrischen Versorgung mehrerer Elektromaschinen (11, 12), die jeweils ein Antriebsrad (13, 14) eines Kraftfahrzeugs antreiben können, bei dem ein mehrphasiger Versorgungswechselstrom unter Ausführung einer Regelung der Spannung und/oder der Frequenz des Versorgungsstroms in Abhängigkeit von wenigstens einem Stellsignal und von einem Referenzsignal (SR) erzeugt wird, um die Gesamtheit der Elektromaschinen zu versorgen, ununterbrochen ein Satz von Drehzahlsignalen (NM1, NM2) erzeugt wird, die jeweils die Drehzahl eines entsprechenden Antriebsrades repräsentieren, und eines der Drehzahlsignale in dem Satz ausgewählt wird, um das Referenzsignal auszugeben,
**dadurch gekennzeichnet, daß** in einer Antriebsbetriebsart, in dem die Maschinen die Antriebsräder antreiben, ununterbrochen eine Schlupferfassung für jedes Antriebsrad ausgeführt wird und im Auswahlschritt dann, wenn wenigstens ein Antriebsrad einen Schlupf aufweist und wenigstens ein Antriebsrad keinen Schlupf aufweist, das Drehzahlsignal (NM1, NM2) ausgewählt wird, das dem Antriebsrad entspricht, das sich am schnellsten dreht und keinen Schlupf aufweist, oder dann, wenn alle Antriebsräder einen Schlupf aufweisen, ein erstes Ersatzsignal (NF1) verwendet wird, um das Referenzsignal (SR) auszugeben.

2. Verfahren nach Anspruch 1, **dadurch gekennzeichnet, daß** das erste Ersatzsignal die Drehzahl eines Antriebsrades, die direkt vor dem Auftreten seines Schlupfes gemessen wird, repräsentiert.

3. Verfahren nach Anspruch 1 oder 2, **dadurch gekennzeichnet, daß** in einer Bremsbetriebsart, in der die Maschinen von den Antriebsrädern angetrieben werden, ununterbrochen eine Erfassung eines Blockierens für jedes Antriebsrad ausgeführt wird und im Auswahlschritt dann, wenn wenigstens ein Antriebsrad nicht blockiert, dasjenige Drehzahlsignal (NM1, NM2) ausgewählt wird, das dem Antriebsrad entspricht, das sich am schnellsten dreht, oder dann, wenn alle Räder blockieren, ein zweites Ersatzsignal (NF1) verwendet wird, um das Referenzsignal (SR) auszugeben.

4. Verfahren nach Anspruch 3, **dadurch gekennzeichnet, daß** das zweite Ersatzsignal die Drehzahl eines Antriebsrades, die direkt vor seinem Blockieren gemessen wird, repräsentiert.

5. Antriebssystem für ein Kraftfahrzeug mit elektrischem Antrieb, insbesondere für die Ausführung des Verfahrens nach Anspruch 1, wobei das System mehrere Elektromaschinen (11, 12), die jeweils mit einem Antriebsrad (13, 14) des Fahrzeugs gekoppelt sind, eine Versorgungsvorrichtung (2), die einen mehrphasigen Versorgungswechselstrom erzeugt, um die Gesamtheit der Elektromaschinen zu versorgen, sowie eine Regelvorrichtung (6), die die Versorgungsvorrichtung in Abhängigkeit von einem Antriebs-Stellsignal (SP) und von den Drehzahlen der Antriebsrädern steuert, wobei die Regelvorrichtung Mittel (10, 21, 22), die ununterbrochen einen Satz von Drehzahlsignalen (NM1, NM2) erzeugen, die die Drehzahlen jedes Antriebsrades repräsentieren, Verarbeitungsmittel (23, 24, 25), die so beschaffen sind, daß sie ein Referenzsignal (SR) in Abhängigkeit von den Drehzahlsignalen ausgeben, und eine Steuereinheit (6), die so beschaffen ist, daß sie das Antriebs-Stellsignal und das Referenzsignal empfängt und die Versorgungsvorrichtung entsprechend steuert, umfaßt,
**dadurch gekennzeichnet, daß** die Verarbeitungsmittel Auswahlmittel (25) und für jedes Drehzahlsignal eine Schlupferfassungseinheit (23, 24), die so beschaffen ist, daß sie einen Schlupf durch Erfassen einer plötzlichen Erhöhung des Drehzahlsignals erfassen und an die Auswahlmittel ein korrigiertes Drehzahlsignal (NC1, NC2) sowie ein Schlupfsignal (P1, P2) ausgeben, umfassen, wobei die Auswahlmittel so beschaffen sind, daß sie eines der korrigierten Drehzahlsignale als Referenzsignal (SR) in Abhängigkeit von den Schlupfsignalen ausgeben.

6. Antriebssystem nach Anspruch 5, **dadurch gekennzeichnet, daß** jede Schlupferfassungseinheit (23, 24) außerdem so beschaffen ist, daß sie ein Blokkieren des entsprechenden Rades durch Erfassen einer plötzlichen Abnahme des Drehzahlsignals erfaßt und an die Auswahlmittel (25) ein Blockiersignal (B1, B2) ausgibt, wobei die Auswahlmittel so beschaffen sind, daß sie eines der korrigierten Drehzahlsignale (NC1, NC2) als Referenzsignal in Abhängigkeit von den Schlupfsignalen (P1, P2) und von den Blockiersignalen (B1, B2) ausgeben.

7. Antriebssystem nach Anspruch 5, **dadurch gekennzeichnet, daß** jede Schlupferfassungseinheit (23, 24) umfaßt:
- eine Eingangsschaltung (31), die das Drehzahlsignal (NM1) empfängt und jederzeit ein Ersatzsignal (NF1) erzeugt, das einen früheren Zustand des Drehzahlsignals repräsentiert,
- eine Differenzierschaltung (32), die ein differentielles Signal (Δ) erzeugt, das die Differenz zwischen dem Ersatzsignal und dem Drehzahlsignal repräsentiert,
- eine Vergleichsschaltung (33), die das Differenzsignal mit einem Schwellenwert vergleicht und das Schlupfsignal (P1), das einen Schlupf angibt, wenn der Schwellenwert überschritten wird, in binärer Form ausgibt, und
- eine Ausgangsschaltung (36), die die Drehzahl-, Ersatz- und Schlupfsignale empfängt und als korrigiertes Drehzahlsignal (NC1) in Abhängigkeit vom Zustand des Schlupfsignals das Drehzahlsignal (NM1) oder das Ersatzsignal (NF1) ausgibt.

8. Antriebssystem nach Anspruch 7, **dadurch gekennzeichnet, daß** jedes Drehzahlsignal (NM1) ein analoges Signal ist und daß die Eingangsschaltung (31) ein Tiefpaßfilter ist.

9. Antriebssystem nach den Ansprüchen 6 und 7, **dadurch gekennzeichnet, daß** die Schlupferfassungsschaltung (23, 24) eine weitere Vergleichsschaltung (34) umfaßt, die das Differenzsignal mit einem negativen Schwellenwert vergleicht und das Blockiersignal (B1), das ein Blockieren angibt, wenn der negative Schwellenwert nach unten überschritten wird, in binärer Form ausgibt, wobei die Ausgangsschaltung (36) außerdem das Blockiersignal empfängt und als korrigiertes Drehzahlsignal (NC1) das Drehzahlsignal oder das Ersatzsignal in Abhängigkeit vom Zustand der Schlupf- und Blockiersignale (P1, B1) ausgibt.

10. Antriebssystem nach Anspruch 5, **dadurch gekennzeichnet, daß** die Verarbeitungsmittel Mittel (26, 38, 42) umfassen, die eine Dauer messen, während der die Schlupfsignale angeben, daß alle Antriebsräder einen Schlupf aufweisen, und die das Antriebs-Stellsignal modifizieren, wenn die Dauer einen vorgegebenen Wert übersteigt.

11. Antriebssystem nach Anspruch 6 und 10, **dadurch gekennzeichnet, daß** die Verarbeitungsmittel Mittel (26, 38, 43) umfassen, die eine Dauer messen, während der die Blockiersignale angeben, daß alle Antriebsräder blockieren, und die ein Brems-Stellsignal modifizieren, wenn die Dauer einen vorgegebenen Wert übersteigt.
